# EUROPÄISCHE PATENTSCHRIFT

(11) **EP 4 494 817 B1**
(45) Veröffentlichungstag und Bekanntmachung des Hinweises auf die Patenterteilung: **02.09.2026**
(21) Anmeldenummer: 24187092.2
(22) Anmeldetag: 08.07.2024
(51) Int. Cl.: B25H 1/00

(54) **HEBE- UND TRANSPORTVORRICHTUNG**
LIFTING AND TRANSPORTING DEVICE
DISPOSITIF DE LEVAGE ET DE TRANSPORT

(30) Priorität: 20.07.2023 DE 102023119208
(43) Veröffentlichungstag der Anmeldung: 22.01.2025
(73) Patentinhaber: Hohmann, Frank, 59581 Warstein (DE); Hohmann, Jörg, 59872 Meschede (DE)
(72) Erfinder: Hohmann, Frank, 59581 Warstein (DE); Hohmann, Jörg, 59872 Meschede (DE)
(74) Vertreter: Alpspitz IP

(56) Entgegenhaltungen:
- KR-A- 20130 026 039
- US-A1- 2019 299 346
- US-A1- 2020 216 296

## Beschreibung

Die Erfindung bezieht sich auf eine Hebe- und Transportvorrichtung gemäß dem Oberbegriff von Anspruch 1.

Unter dem Vorspannen einer Schraubverbindung wird im Rahmen dieser Anmeldung sowohl ein reibungs- und torsionsfreies Vorspannen, bei dem ausschließlich eine Zugkraft auf den Schraubenbolzen aufgebracht und die Schraubenmutter anschließend beigedreht wird, als auch ein drehendes Vorspannen - z. B. nach dem Drehmoment- oder dem Drehwinkelverfahren - verstanden.

Dementsprechend werden im Rahmen dieser Anmeldung unter Schraubwerkzeugen sowohl Zug aufbringende Schraubwerkzeuge, z. B. Schraubenspannzylinder, als auch drehende Schraubwerkzeuge, z. B. Drehmomentschrauber oder Drehschrauber, verstanden, wobei die Schraubwerkzeuge automatische oder auch manuelle Schraubwerkzeuge sein können.

Ferner wird dementsprechend unter einer Schraubstellung eine Stellung bzw. Position eines Schraubwerkzeuges verstanden, in der es eine Schraubverbindung vorspannen kann.

Unter Lastraum wird im Rahmen dieser Anmeldung der von der anzuhebenden bzw. zu transportierenden Last eingenommene Raum, d. h. der von dem Schraubwerkzeug eingenommene Raum, verstanden.

Eine gattungsgemäße Hebe- und Transportvorrichtung ist aus der DE 10 2012 009 255 A1 bekannt. Mit einer solchen Vorrichtung können Schraubverbindungen in Flanschverbindungen vorgespannt werden, bei denen der Schraubenbolzen von unten durch die miteinander fluchtenden Durchgangsbohrungen in den miteinander zu verbindenden Bauteilen gesteckt wird, bis der Bolzenkopf an der Flansch-Unterseite der zu verbindenden Bauteile anliegt, und auf der Flansch-Oberseite auf das mit einem Gewinde versehene Bolzenende eine Mutter per Hand aufgeschraubt wird, bis sie an der Flansch-Oberseite anliegt. Ein Schraubwerkzeug ist über der Flansch-Oberseite in der Hebe- und Transportvorrichtung gehaltert und wird über der vorzuspannenden Schraubverbindung positioniert und dann auf diese abgesenkt. Nach erfolgtem Vorspannen der Schraubverbindung wird das Schraubwerkzeug mittels der Hebe- und Transportvorrichtung wieder angehoben und zur nächsten Schraubverbindung verschoben.

Aus der DE 10 2019 200 042 B3 ist eine Hebe- und Transportvorrichtung bekannt, mit der Schraubverbindungen in Flanschverbindungen vorgespannt werden können, bei denen der Schraubenbolzen von oben in die Durchgangsbohrungen der miteinander zu verbindenden Flansche gesteckt und die Muttern auf der Flansch-Unterseite von Hand auf die Schraubenbolzen aufgeschraubt werden.

Die DE 10 2022 105 559 B3 offenbart eine Hebe- und Transportvorrichtung, mit der Schraubwerkzeuge auch auf Schrägflanschen auf der Flansch-Oberseite und/oder auf der Flansch-Unterseite mit einer Schraubverbindung in Eingriff gebracht werden können.

Aus KR 10 2013 0 026 039 A ist ein Wartungsroboter zum Anziehen, Inspizieren und Markieren von Schrauben in Flanschverbindungen von Windkrafträdern bekannt. Der Wartungsroboter ist vor der Flansch-Stirnseite angeordnet und weist einen oberen und einen unteren Arm zum Halten und Befestigen einer Schraube auf. Ferner weist er Stützabschnitte auf, die den Flansch über- und untergreifen und die Bewegung des Wartungsroboters stabilisieren sollen, wenn er längs des Flansches bewegt wird.

Aus US 2019/299346 A1 ist ein Gegenhalter bekannt, der dazu dient, ein gemeinsames Drehen von Schraubenmutter und Schraube beim Vorspannen, Nachspannen oder Lösen einer Schraubverbindung zu verhindern. Der Gegenhalter ist mit einem Werkzeugträger verbunden, auf dem das Spannwerkzeug angeordnet ist, und weist einen Gegenhalter-Hauptkörper auf, der an einem Ende mit einem Antrieb verbunden ist, der ebenfalls auf dem Werkzeugträger angeordnet ist. Der Gegenhalter-Hauptkörper erstreckt sich längs der Vorderseite der Flanschverbindung und ist an seinem anderen Ende mit einem Gegenhalter-Abschnitt verbunden, der sich unter die Flanschverbindung erstreckt. Der Gegenhalter-Abschnitt ist dazu eingerichtet, mit einem sechseckförmigen Teil der Schraube (d. h. mit dem Schraubenkopf) der vorzuspannenden Schraubverbindung in Eingriff zu kommen, um durch Formschluss ein Mitdrehen der Schraube mit der Schraubenmutter zu verhindern, wenn die Schraubenmutter zum Vorspannen (oder Nachspannen oder Lösen) der Schraubverbindung gedreht wird. Der Gegenhalter ist nur mittels seines Antriebs an dem Werkzeugträger befestigt. Der Antrieb ist als Zahnstangenantrieb mit einer Zahnstange und einem Ritzel ausgebildet. Der Zahnstangenantrieb dient dazu, den Gegenhalter (genauer: den Gegenhalter-Abschnitt) in Eingriff und außer Eingriff mit dem sechseckförmigen Teil (Schraubenkopf) der Schraube zu bewegen und kann quer zu der Achse der Schraubverbindung arbeiten (d. h. horizontal) oder parallel zu der Achse der Schraubverbindung (d. h. vertikal).

Aufgabe der vorliegenden Erfindung ist es, die Sicherheit bei der Handhabung einer gattungsgemäßen Hebe- und Transportvorrichtung zu erhöhen.

Erfindungsgemäß wird diese Aufgabe bei einer Vorrichtung der eingangs genannten Art durch die kennzeichnenden Merkmale des Anspruchs 1 gelöst. Vorteilhafte Ausgestaltungen sind Gegenstand der Unteransprüche.

Durch die erfindungsgemäßen Maßnahmen kann eine Hebe- und Transportvorrichtung und das in ihr befestigte Schraubwerkzeug nicht von der Montagestelle wegkatapultiert werden und dadurch möglicherweise Personen, insbesondere das die Hebe- und Transportvorrichtung und das Schraubwerkzeug bedienende Montagepersonal, verletzen, falls die vorzuspannende Schraubverbindung oder die Verbindung des Schraubwerkzeugs mit der vorzuspannenden Schraubverbindung während des Vorspannvorgangs bricht. Solche Brüche treten bei Materialfehlern auf und können daher nicht ausgeschlossen werden. Da während des Vorspannvorgangs die aufgebrachte Vorspannkraft in der Hebe- und Transportvorrichtung sowie in dem Schraubwerkzeug und in der Schraubverbindung wirkt, wird diese Vorspannkraft bei den vorbeschriebenen Brüchen plötzlich frei und bewirkt somit eine plötzliche Beschleunigung des Schraubwerkzeugs und der mit ihm verbundenen Hebe- und Transportvorrichtung. Dadurch, dass das Schraubwerkzeug funktionsmäßig mit einer Zugverankerung verbunden ist, die in an einem Flansch montierten Zustand der Hebe- und Transportvorrichtung lösbar mit dem Flansch oder mit mindestens einer Schraubverbindung verbindbar ist, ist einerseits während des Vorspannens sowohl das Schraubwerkzeug als auch gleichzeitig die mit ihm verbundene Hebe- und Transportvorrichtung gegen ein unkontrolliertes Abheben vom Flansch gesichert und andererseits nach dem Vorspannen der Schraubverbindung ein schnelles Weiterschieben der Hebe- und Transportvorrichtung zur nächsten vorzuspannenden Schraubverbindung möglich.

Der Begriff "funktionsmäßig" bedeutet dabei, dass die Zugverankerung nicht unmittelbar am Schraubwerkzeug befestigt sein muss, sondern auch mittelbar -beispielsweise mittels des Rahmens- mit dem Schraubwerkzeug verbunden sein kein.

Die Erfindung macht sich die Tatsache zunutze, dass während des Vorspannens die Hebe- und Transportvorrichtung und das Schraubwerkzeug fest miteinander verbunden sind und deshalb nur eins von beiden mit der Zugverankerung verbunden sein muss, um beide gegen unkontrolliertes Abheben zu sichern.

Da ferner erfindungsgemäß die Zugverankerung dazu ausgelegt ist, bei einem Bruch der in Rede stehenden Art den Abhebeweg des Schraubwerkzeugs in Hubrichtung auf ein vorgegebenes Maß zu begrenzen, ist gewährleistet, dass das Schraubwerkzeug im Normalbetrieb während des Spannvorgangs in Spann- bzw. Hubrichtung bis zum vorgegebenen Maß ausreichend Bewegungsmöglichkeit hat, d. h., dass beispielsweise der in der Hebe- und Transportvorrichtung maximal mögliche Hubweg oder ein für den jeweiligen Spannvorgang erforderlicher Hubweg vom Schraubwerkzeug ungehindert durchlaufen werden kann.

In einer bevorzugten Ausführungsform der Erfindung weist die Zugverankerung einen L-förmigen Steg auf, der dazu ausgelegt ist, sich mit einem ersten Abschnitt entlang der Flansch-Stirnseite und mit einem zum ersten Abschnitt querverlaufenden zweiten Abschnitt entlang der Flansch-Unterseite zu erstrecken, wobei der zweite Abschnitt zumindest auf einem Teilabschnitt einen vorgegebenen lichten Maximalabstand zur Flansch-Unterseite nicht überschreitet, wobei der L-förmige Steg biegesteif ausgebildet ist und biegesteif mit dem Rahmen verbunden ist und dazu ausgelegt ist, durch Formschluss zwischen der Flansch-Unterseite und zumindest dem besagten Teilabschnitt des zweiten Abschnitts des L-förmigen Steges den Abhebeweg des Rahmens in Hubrichtung auf ein zweites vorgegebenes Maß zu begrenzen. Mit diesen Maßnahmen ist die Zugverankerung äußerst montagefreundlich ausgebildet, da mit dem normalen Aufschieben der Hebe- und Transportvorrichtung zum Vorspannen auf den Flansch und dem normalen Weiterschieben der Hebe- und Transportvorrichtung nach dem Vorspannen zur nächsten Schraubverbindung auch bereits die Zugverankerung betriebsfertig montiert ist. Die Zugverankerung ist hierbei an dem Rahmen befestigt, sodass das Schraubwerkzeug sich in dem Rahmen auf seinem Hubweg frei bewegen kann und trotzdem mittels seiner Befestigung an der verschieblichen Halterung fest mit dem Rahmen verbunden ist und dadurch gegen unkontrolliertes Abheben gesichert ist.

Vorteilhafterweise weist der L-förmige Steg zwei L-förmige Stegteile auf, die in Transportrichtung zueinander beabstandet sind und zueinander parallel verlaufen. Auf diese Weise ist die Kippstabilität um eine senkrecht zur Transportrichtung und parallel zum Flansch verlaufende Achse gewährleistet, sodass im Fall eines hier in Rede stehenden Bruches die vertikale Ausrichtung der Hebe- und Transportvorrichtung einschließlich des Schraubwerkzeuges im Wesentlichen erhalten bleibt und daher größere Beschädigungen der Hebe- und Transportvorrichtung und des Schraubwerkzeuges, die bei einem Umkippen eintreten können, nicht zu erwarten sind.

In einer günstigen Weiterentwicklung der Erfindung ist der zweite Abschnitt des L-förmigen Steges dazu ausgelegt, vor den Schraubverbindungen zu enden. Hierdurch kann der Herstellungsaufwand für die Zugverankerung relativ geringgehalten werden.

In einer weiteren vorteilhaften Ausführungsform der Erfindung sind die zweiten Abschnitte der zwei L-förmigen Stegteile jeweils auf zumindest einem Teilabschnitt dazu ausgelegt, die der vorzuspannenden Schraubverbindung benachbarten Schraubverbindungen zu hintergreifen, und sind die hintergreifenden Teilabschnitte die besagten Teilabschnitte, die den vorgegebenen lichten Maximalabstand zur Flansch-Unterseite nicht überschreiten. Mit diesen Maßnahmen ist die Hebe- und Transportvorrichtung zusätzlich gegen ein Abrutschen senkrecht zur Transportrichtung über die Flansch-Stirnseite gesichert und gleichzeitig auch gegen ein Kippen um eine zur Transportrichtung parallele Achse gesichert, da die die Schraubverbindungen hintergreifenden Teilabschnitte sich je nach Kipprichtung entweder an die hintergriffenen Schraubverbindungen oder an die von Flansch nach unten abgehende Bauteilwand anlehnen.

Bevorzugt ist der L-förmige Steg ferner dazu ausgelegt, im Zusammenwirken mit dem auf der Flansch-Oberseite anliegendem ersten Auflager ein C-förmiges biegesteifes Gebilde zu bilden, das bei einem Bruch der vorzuspannenden Schraubverbindung oder der Verbindung des Schraubwerkzeugs mit der vorzuspannenden Schraubverbindung durch Formschluss mit dem Flansch den Kippwinkel des Rahmens um eine zur Transportrichtung parallele Achse auf ein jeweils vorgegebenes Maß begrenzt. Hierdurch wird die Kippstabilität noch weiter erhöht und zudem das aufnehmbare Kippmoment gesteigert.

In einer weiteren günstigen Ausführungsform der Erfindung weist die Zugverankerung mindestens ein Zugelement auf, das an dem Rahmen befestigt ist und einen Schraubanschluss aufweist, der auf das auf der Flansch-Oberseite aus einer Schraubenmutter vorragende Gewindeende einer Schraubverbindung aufschraubbar ist. Eine solche Zugverankerung kann ebenfalls kostengünstig hergestellt und relativ schnell montiert werden.

Bevorzugt weist der Rahmen dabei eine Querstrebe auf, die sich in an einem Flansch montierten Zustand der Hebe- und Transportvorrichtung oberhalb der vorzuspannenden Schraubverbindung erstreckt, wobei sich das Zugelement quer über die Querstrebe von deren der Flansch-Stirnseite zugewandten Seite zu deren der Flansch-Stirnseite abgewandten Seite erstreckt und beidseits des Rahmens auf ein aus einer Schraubenmutter vorragendes Gewindeende einer Schraubverbindung aufschraubbar ist. Mit diesen Maßnahmen werden die Fertigungs- und Montagekosten einer Zugverankerung weiter deutlich gesenkt.

In einer weiteren vorteilhaften Ausführungsform der Erfindung ist die Zugverankerung aus zwei getrennten Zugelementen gebildet, die jeweils an einem der Rahmenteile befestigt sind und einen Schraubanschluss aufweisen, der auf das auf der Flansch-Oberseite aus einer Schraubenmutter vorragende Gewindeende einer Schraubverbindung aufschraubbar ist. Eine derartige Zugverankerung ist zum einen einfacher herstellbar und leichter montierbar und ist zum anderen auch betriebssicherer, da im Fall des Reißens des einen Zugelements das andere Zugelement immer noch seine Aufgabe erfüllen kann.

Vorzugsweise verfügt jeder Schraubanschluss über einen Schnellspann- oder Klemmmechanismus, mit dem die Verbindung mit dem über eine Schraubenmutter vorragenden Gewindeende schnell herstellbar und wieder lösbar ist. Hierdurch können die Montagezeiten weiter verkürzt werden.

Bevorzugt ist zumindest das zweite Auflager magnetisch. Auf diese Weise kann die Hebe- und Transportvorrichtung noch besser in Anlage mit der Bauteilwand gebracht und ein Kippen bei einem Bruch der vorzuspannenden Schraubverbindung oder der Verbindung des Schraubwerkzeugs mit der vorzuspannenden Schraubverbindung verhindert werden.

Die Erfindung wird nachfolgend anhand der Zeichnungen beispielshalber noch näher erläutert. Es zeigen:
- Figuren 1 bis 4: eine vertikale Seitenansicht, eine Vorderansicht, eine Draufsicht und eine Perspektivansicht einer ersten Ausführungsform einer erfindungsgemäßen Hebe- und Transportvorrichtung, eingesetzt beim Herstellen einer geschraubten Flanschverbindung, noch ohne Schraubwerkzeug;
- Figur 5: die Vorderansicht aus Figur 2, mit Schraubwerkzeug;
- Figuren 6 bis 10: eine vertikale Seitenansicht, eine Vorderansicht, eine Draufsicht, eine Untersicht und eine Perspektivansicht einer zweiten Ausführungsform einer erfindungsgemäßen Hebe- und Transportvorrichtung, eingesetzt beim Herstellen einer geschraubten Flanschverbindung, noch ohne Schraubwerkzeug;
- Figur 11: die Vorderansicht aus Figur 7, mit Schraubwerkzeug;
- Figuren 12 bis 15: eine vertikale Seitenansicht, eine Vorderansicht, eine Draufsicht und eine Perspektivansicht einer dritten Ausführungsform einer erfindungsgemäßen Hebe- und Transportvorrichtung, eingesetzt beim Herstellen einer geschraubten Flanschverbindung, noch ohne Schraubwerkzeug;
- Figur 16: die Vorderansicht aus Figur 13, mit Schraubwerkzeug.

In den Figuren sind Ausführungsformen einer erfindungsgemäßen Hebe- und Transportvorrichtung für einen Einsatz zusammen mit einem Schraubenspannzylinder dargestellt. Durch einfache konstruktive Änderungen ist eine erfindungsgemäße Hebe- und Transportvorrichtung jedoch für jedes andere automatische oder manuelle Schraubwerkzeug einsetzbar.

Die in den Figuren dargestellten Ausführungsformen einer erfindungsgemäßen Hebe- und Transportvorrichtung 1 weisen einen Rahmen 2, eine Halterungseinrichtung 3, eine Hubeinrichtung 4, erste, zweite und dritte Auflager 5, 6, 7 sowie ein Hilfs-Auflager 8 auf. Die Heberichtung ist mit 9 und die Transportrichtung mit 10 bezeichnet.

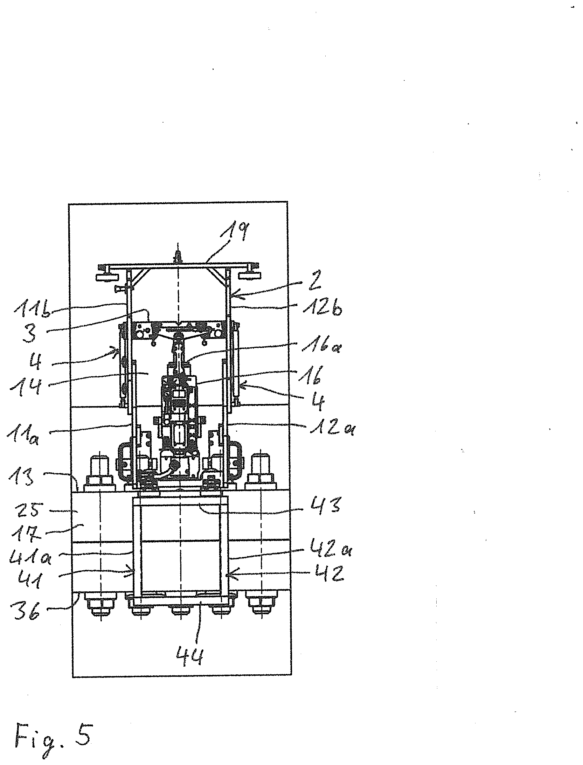

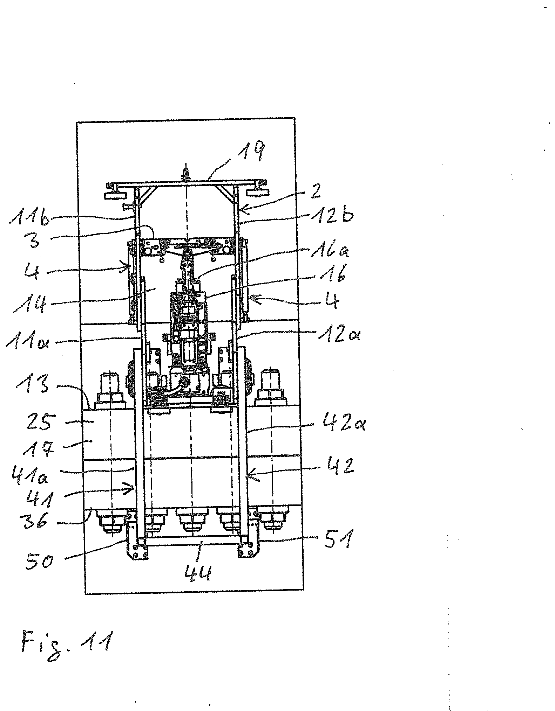

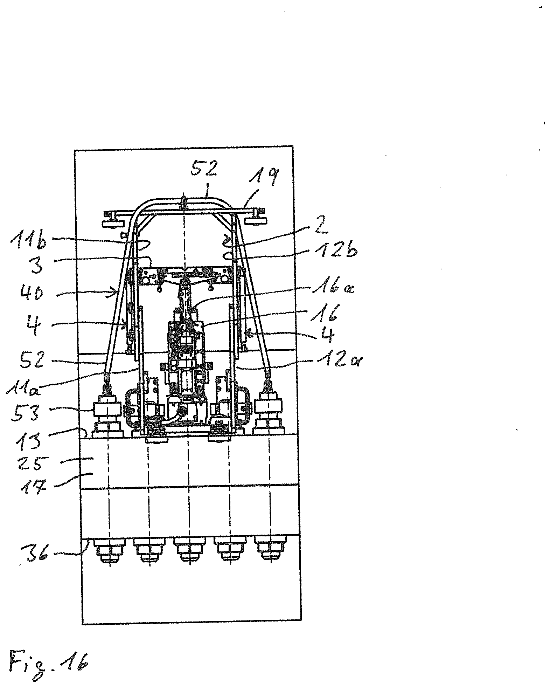

Der Rahmen 2 ist aus zwei Rahmenteilen 11, 12 gebildet, die auf der Flansch-Oberseite 13 in Transportrichtung 10 vor und hinter einem Lastraum 14 angeordnet sind und sich senkrecht zur Transportrichtung 10 neben und oberhalb des Lastraums 14 erstrecken. Der lichte Abstand zwischen den beiden Rahmenteilen 11, 12 ist in den dargestellten Ausführungsbeispielen zur Aufnahme einer Schraubverbindung 15 und eines auf diese aufgesetzten Schraubenspannzylinders 16 ausgelegt (Figuren 5, 11 und 16).

Die Rahmenteile 11, 12 sind jeweils aus ersten und zweiten Rahmenabschnitten 11a, 11b; 12a, 12b gebildet. Die ersten Rahmenabschnitte 11a, 12a sind jeweils L-förmig ausgebildet. Ihre ersten Enden sind jeweils in einem Bereich zwischen der Flansch-Stirnseite 17 und den Schraubverbindungen 15 angeordnet. Von dort aus erstrecken sich die ersten Rahmenabschnitte 11a, 12a zunächst nach oben und dann über die der vorzuspannenden Schraubverbindung 15a benachbarten Schraubverbindungen 15. Dort sind ihre zweiten Enden jeweils mit einem ersten Ende der zweiten Rahmenabschnitte 11b, 12b biegesteif verbunden, beispielsweise verschraubt. Die zweiten Rahmenabschnitte 11b 12b erstrecken sich in vertikaler Richtung über die Oberseite 16a des aufzunehmenden Schraubenspannzylinders 16 hinaus.

Die freien, ersten Enden der ersten Rahmenabschnitte 11a, 12a sind durch eine untere Querstrebe 18 und die freien, zweiten Enden der zweiten Rahmenabschnitte 11b, 12b durch eine obere Querstrebe 19 miteinander verbunden.

In den zweiten Rahmenabschnitten 11b, 12b ist jeweils ein in deren Längsrichtung verlaufender Schlitz 20 ausgebildet, in denen die Halterungseinrichtung 3 verschieblich gelagert ist. Die Halterungseinrichtung 3 ist als in Transportrichtung verlaufende Strebe ausgebildet, die an ihren Enden in den Schlitzen 20 vertikal verschieblich gelagert ist. In der Mitte ihrer Längserstreckung weist die Halterungseinrichtung 3 eine Befestigung für den Schraubenspannzylinder 16 auf, um den Schraubenspannzylinder 16 vor dem Vorspannen der Schraubverbindung 15a abzusenken und nach dem Vorspannen von dieser abzuheben.

An den zweiten Rahmenabschnitten 11b,12b ist die Hubeinrichtung 4 befestigt. Im dargestellten Ausführungsbeispiel weist sie an jedem der zweiten Rahmenabschnitte 11b, 12b eine Gasdruckfeder 21 auf, deren erstes Ende 22 jeweils nahe dem ersten Ende der zweiten Rahmenabschnitte 11b, 12b unverschieblich befestigt ist und deren zweites Ende 23 jeweils mit einem Ende der Halterungseinrichtung 3 auf der dem Lastraum 14 abgewandten Seite der zweiten Rahmenabschnitte 11b, 12b verbunden ist. Mit Hilfe der Gasdruckfedern 21 wird das Schraubwerkzeug 16, d. h. im dargestellten Fall der Schraubenspannzylinder, nach dem Vorspannen/Lösen der Schraubverbindung 15a entgegen der Schwerkraft nach oben gedrückt. Das Schraubwerkzeug 16 ist mit der Halterungseinrichtung 3 unverschieblich verbunden. Es kann beispielsweise mit der Halterungseinrichtung 3 verschraubt oder von dieser magnetisch oder formschlüssig (z. B. mittels Rastbolzen) gehaltert werden.

An den beiden Enden der unteren Querstrebe 18 ist jeweils eine erste Laufrolle 24 drehbar befestigt, deren Drehachse horizontal und senkrecht zur Transportrichtung 10 verläuft. Beide erste Laufrollen 24 bilden gemeinsam ein erstes Laufrollenpaar. Es ist zur Anlage an der Oberseite 13 eines Flansches 25 ausgelegt und bildet das erste Auflager 5 aus.

Unter der Bezeichnung "Flansch 25" wird hier eine Flanschverbindung bzw. -paarung mit einem oberen Flansch und einem unteren Flansch verstanden. Dabei kann der Flansch 25 geradlinig oder ringförmig in Form eines Innen- oder Außenrings ausgeführt sein.

Die Auflagerichtung 5a des ersten Auflagers 5 verläuft senkrecht zur Transportrichtung 10 in Heberichtung 9. Diese Laufrollen 24 liegen an der Oberseite 13 des Flansches 25 zwischen den Schraubverbindungen 15 und der Flanschkante 26 an, sodass sie beim Weiterrollen zur benachbarten Schraubverbindung 15 zwischen den Schraubenmuttern 27 und der Flanschkante 26 abrollen können.

Nahe der zweiten, freien Enden der beiden zweiten Rahmenabschnitte 11b, 12b ist an der oberen Querstrebe 19 jeweils eine zweite Laufrolle 28 um eine Drehachse 29 drehbar gelagert, die vertikal und senkrecht zur Transportrichtung 10 verläuft. Gemeinsam bilden sie ein zweites Laufrollenpaar aus. Es ist zur horizontalen Anlage an eine vom Flansch 25 senkrecht aufgehende Bauteilwand 30 ausgelegt und bildet das zweite Auflager 6. Dessen Auflagerichtung 6a verläuft senkrecht zur Transportrichtung 10 und senkrecht zur Heberichtung 9, d. h. senkrecht zur Auflagerichtung 5a. Die Laufrollen 28 liegen oberhalb des Endes des Schraubverbindung 15a an der Bauteilwand 30 an und können so ungehindert in Transportrichtung 10 auf der Bauteilwand 30 abrollen. Die zweiten Laufrollen 28 können quer zur Transportrichtung 10 horizontal jeweils um ein vorgegebenes Maß verschiebbar sein, um eine sichere Anlage an der Bauteilwand 30 zu gewährleisten. Mittels einer Arretiervorrichtung sind sie in ihrer gewünschten horizontalen Position arretierbar. Zudem können die zweiten Laufrollen 28 magnetisch sein, damit die Hebe- und Transportvorrichtung 1 noch besser in Anlage mit der Bauteilwand 30 gebracht und ein Kippen bei einem Bruch der vorzuspannenden Schraubverbindung 15a oder der Verbindung des Schraubwerkzeugs 16 mit der vorzuspannenden Schraubverbindung 15a verhindert werden kann.

Das erste und das zweite Laufrollenpaar, d. h. das erste und das zweite Auflager 5, 6, weisen zueinander einen Abstand in Heberichtung 9 auf, der im Wesentlichen der Länge der Rahmenteile 11, 12 entspricht. Ihr Abstand senkrecht zur Transportrichtung 10 und zur Heberichtung 9 entspricht im Wesentlichen der horizontalen Erstreckung der ersten Rahmenabschnitte 11a, 12a.

Ferner ist nahe der ersten, freien Enden der beiden ersten Rahmenabschnitte 11a, 12a an Laschen 31, die an der unteren Querstrebe 18 biegesteif befestigt sind, noch jeweils eine dritte Laufrolle 32 drehbar befestigt, deren Drehachse 33 vertikal und senkrecht zur Transportrichtung 10 verläuft. Dieses dritte Laufrollenpaar ist zum horizontalen Anlegen an die Flansch-Stirnseite 17 ausgelegt und bildet das dritte Auflager 7 aus. Dessen Auflagerichtung 7a verläuft parallel zur Auflagerichtung 6a des zweiten Auflagers 6. Diese Laufrollen 32 sind in den Laschen 31 quer zur Transportrichtung 10 horizontal in jeweils einem Langloch 34 verschiebbar, um eine Anlage an der Flansch-Stirnseite 17 zu gewährleisten. Mittels einer weiteren Arretiervorrichtung 35 sind sie in ihrer gewünschten horizontalen Position arretierbar.

An den ersten Rahmenabschnitten 11a, 12a ist jeweils noch ein Hilfs-Auflager 8 befestigt, das zum Hintergreifen der Schraubverbindungen 15 ausgelegt ist, die der vorzuspannenden Schraubverbindung 15a benachbart sind. Die Hilfs-Auflager 8 sind jeweils mittels einer Verstelleinrichtung sowohl in ihrer horizontalen als auch in ihrer vertikalen Position verstellbar, um ihre sichere Anlage an den benachbarten Schraubverbindungen 15 zu gewährleisten. In ihren gewünschten horizontalen und vertikalen Positionen sind sie mittels weiteren (nicht dargestellten) Arretiervorrichtungen arretierbar.

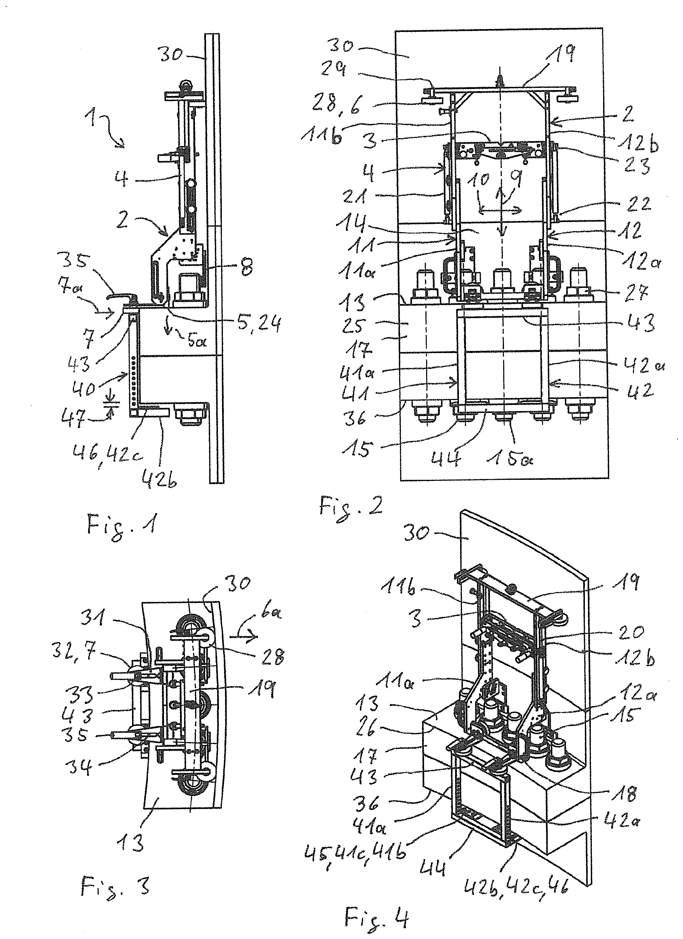

Das in den Figuren 1 bis 5 dargestellte Ausführungsbeispiel einer erfindungsgemäßen Hebe- und Transportvorrichtung1 weist eine Zugverankerung 40 auf, die als L- förmiger Steg ausgebildet, der an den Laschen 31 biegesteif befestigt ist, Der L-förmige Steg 40 ist aus zwei in Transportrichtung voneinander beabstandeten und zueinander parallelen L-förmigen Stegteilen 41, 42 gebildet, mit jeweils einem ersten Abschnitt 41a, 42a, der sich im eingesetzten Zustand der Hebe- und Transportvorrichtung 1 längs der Flansch-Stirnseite 17 erstreckt, und mit jeweils einem zum ersten Abschnitt 41a, 42a querverlaufenden zweiten Abschnitt 41b, 42b, der sich längs der Flansch-Unterseite 36 erstreckt. Die ersten Abschnitte 41a, 42a sind an ihren beiden Enden mittels einer oberen und einer unteren Strebe 43, 44 zu einem in Transportrichtung verformungssteifen Rahmen miteinander verbunden, der dort an den Laschen 31 befestigt ist, wo auch eine dritte Laufrolle 32 befestigt ist.

Die zweiten Abschnitte 41b, 42b sind an diesen Rahmen 41a, 42a, 43, 44 biegesteif angeschlossen und erstrecken sich parallel zu der Flansch-Unterseite 36 bis zu einem vorgegebenen Abstand vor den Schraubverbindungen 15. Auf ihrer der Flansch-Unterseite 36 zugewandten Seite weisen die Abschnitte 41b, 42b auf einem Teilabschnitt 41c, 42c jeweils eine zur Flansch-Unterseite 36 parallele Anlegeplatte 45, 46 in einem vorgegebenen lichten Abstand von der Flansch-Unterseite 36 auf.

Die zweiten Abschnitte 41b, 42b und die untere Strebe 44 sind höhenverstellbar an den ersten Abschnitten 41a, 42a befestigt, um die als L-förmiger Steg ausgebildete Zugverankerung 40 an unterschiedlich starke Flansche leicht anpassen zu können.

Bei einem Bruch der vorzuspannenden Schraubverbindung 15a oder der Verbindung des Schraubwerkzeugs 16 mit der vorzuspannenden Schraubverbindung 15a während des Vorspannvorgangs schnellt das Schraubwerkzeug 16 in der Hebe- und Transportvorrichtung 1 in Heberichtung 9 nach oben, bis es an der oberen Querstrebe 19 anschlägt und dadurch auf die Hebe- und Transportvorrichtung 1 eine nach oben gerichtete Kraft ausübt, die ein Abheben der Hebe- und Transportvorrichtung 1 von der Flansch-Oberseite 13 bewirkt. Dabei legen sich die Anlegeplatten 45, 46 der zweiten Abschnitte 41b, 42b der L-förmigen Stegteile 41, 42 an die Flansch-Unterseite 36 an und bewirken durch diesen Formschluss eine Begrenzung des Abhebeweges der Hebe- und Transportvorrichtung 1 und damit auch des in der Hebe- und Transportvorrichtung 1 befestigten Schraubwerkzeugs 16.

Der lichte Abstand 47 zwischen den zweiten Abschnitten 41b, 42b und der Flansch-Unterseite 36 ist so ausgelegt, dass einschließlich des Abhebewegs der Hebe- und Transportvorrichtung 1 der Abhebeweg des Schraubwerkzeugs 16 insgesamt ein vorgegebenes Maß nicht überschreitet.

Darüber hinaus kann durch den Formschluss der Anlegeplatten 45, 46 der zweiten Abschnitte 41b, 42b der L-förmigen Stegteile 41, 42 mit der Flansch-Unterseite 36 im Zusammenwirken mit den Hilfs-Auflagern 8, die auf der Flansch-Oberseite 13 die der vorzuspannenden Schraubverbindung 15a benachbarten Schraubverbindungen 15 hintergreifen, auch ein Kippmoment aufgenommen werden, da von den zweiten Abschnitten 41b, 42b bis zu den Hilfs-Auflagern 8 durch die aufeinander folgenden biegesteifen Verbindungen ein C-förmiges biegesteifes Gebilde entstanden ist. Auf diese Weise wird ein Kippen der Hebe- und Transportvorrichtung 1 über die Flanschkante 26 verhindert.

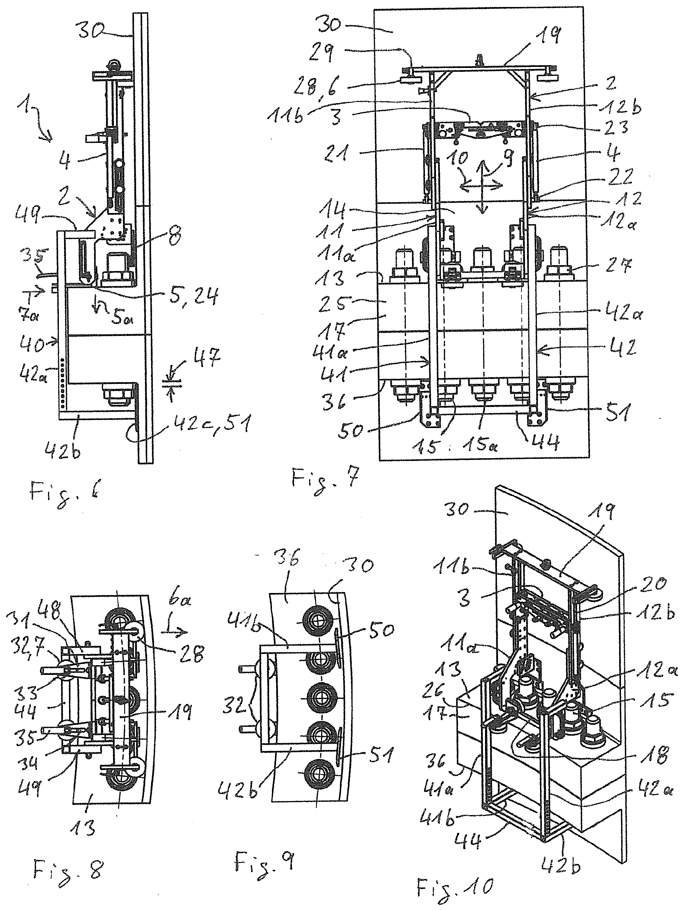

Bei dem Ausführungsbeispiel gemäß den Figuren 6 bis 11 ist die Zugverankerung 40 im Wesentlichen ebenfalls L-förmig ausgebildet, mit folgenden Modifikationen gegenüber dem Ausführungsbeispiel aus den Figuren 1 bis 5:
Die ersten Abschnitte 41a, 42a erstrecken sich über die Flansch-Oberseite 13 hinaus. An ihrem ersten Ende ist jeweils ein Ende eines Verbindungsstegs 48, 49 biegesteif befestigt, dessen anderes Ende am ersten Rahmenabschnitt 11a, 12a biegesteif befestigt ist.

Die ersten Abschnitte 41a, 42a erstrecken sich an den dritten Lagerrollen 32 vorbei und -im eingesetzten Zustand der Hebe- und Transportvorrichtung- soweit über die Flansch-Unterseite 36 hinaus, dass die zweiten Abschnitte 41b, 42b sich über die Schraubverbindungen 15, die der vorzuspannenden Schraubverbindung 15a benachbart sind, hinweg in Richtung Bauteilwand 30 erstrecken können. An ihrem freien Ende ist jeweils eine Platte 50, 51 biegesteif befestigt, die dazu ausgebildet ist, sich zwischen den besagten Schraubverbindungen 15 und der Bauteilwand 30 in Richtung Flansch-Unterseite 36 zu erstrecken, d. h. die besagten Schraubverbindungen 15 zu hintergreifen.

Bei diesem Ausführungsbeispiel ist der lichte Abstand 47 zwischen den Platten 50, 51 und der Flansch-Unterseite 36 ebenfalls so ausgelegt, dass bei einem Bruch der vorzuspannenden Schraubverbindung 15a oder der Verbindung des Schraubwerkzeugs 16 mit der vorzuspannenden Schraubverbindung 15a während des Vorspannvorgangs der Abhebeweg des Schraubwerkzeugs 16 einschließlich des Abhebewegs der Hebe- und Transportvorrichtung 1 ein vorgegebenes Maß nicht überschreitet.

Darüber hinaus kann auch hier durch den Formschluss der Platten 50, 51 mit der Flansch-Unterseite 36 sowie mit der Bauteilwand 30 im Zusammenwirken mit den Hilfs-Auflagern 8, die auf der Flansch-Oberseite 13 die der vorzuspannenden Schraubverbindung 15a benachbarten Schraubverbindungen 15 hintergreifen, ebenfalls ein Kippmoment aufgenommen werden, so dass ein Kippen der Hebe- und Transportvorrichtung 1 über die Flanschkante 26 verhindert wird.

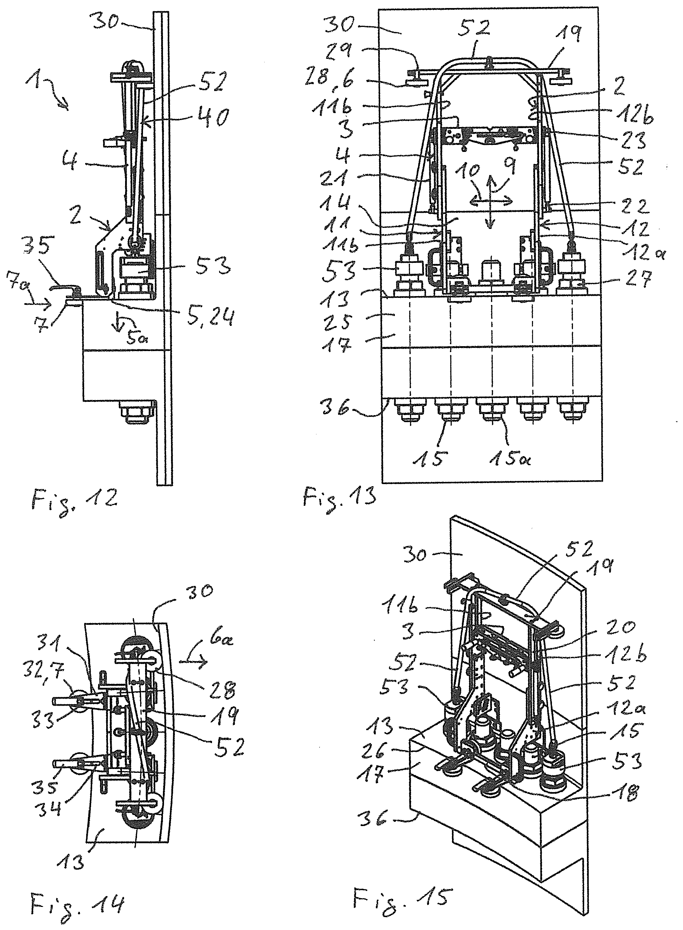

Bei der Ausführungsform gemäß den Figuren 12 bis 16 weist die Zugverankerung 40 ein biegeschlaffes Zugelement 52 auf, das sich quer über die obere Querstrebe 19 der Hebe- und Transportvorrichtung 1 von deren der Flansch-Stirnseite 17 zugewandten Seite zu deren der Flansch-Stirnseite 17 abgewandten Seite erstreckt und an seinen beiden Enden jeweils einen Schraubanschluss 53 aufweist, der auf das auf der Flansch-Oberseite 13 aus einer Schraubenmutter 27 vorragende Gewindeende einer Schraubverbindung 15 aufschraubbar ist.

Im eingesetzten Zustand der Hebe- und Transportvorrichtung 1 sind diese Schraubanschlüsse 27 beidseits des Rahmens 2 auf die Gewindeenden der dort unmittelbar benachbarten Schraubverbindungen 15 aufgeschraubt.

In einem weiteren (nicht dargestellten) Ausführungsbeispiel ist die Zugverankerung 40 aus zwei getrennten Zugelementen gebildet, die jeweils an einem der Rahmenteile 11, 12 befestigt sind und einen Schraubanschluss 53 aufweisen, der -wie bei dem Ausführungsbeispiel aus den Figuren 12 bis 16- auf das auf der Flansch-Oberseite 13 aus einer Schraubenmutter 27 vorragende Gewindeende einer Schraubverbindung 15 aufschraubbar ist.

Denkbar ist, dass jeder Schraubanschluss 53 über einen Schnellspann- oder Klemmmechanismus verfügt, mit dem die Verbindung mit dem über eine Schraubenmutter 27 vorragenden Gewindeende schnell herstellbar und wieder lösbar ist.

In den Figuren 5, 11 und 16 sind die Hebe- und Transportvorrichtungen 1 aus den Figuren 1 bis 4, 6 bis 10 und 12 bis 15 im Einsatz bei der Herstellung einer geschraubten Flanschverbindung dargestellt. Ein Schraubenspannzylinder 16 sitzt auf der Oberseite 13 des Flansches 25 und auf der Schraubenmutter 27 der vorzuspannenden Schraubverbindung 15a auf und steht mit dem Endbereich des Schraubenbolzens in Krafteingriff. Die beiden Rahmenteile 11, 12 sind in Transportrichtung 10 beidseits des Schraubenspannzylinders 16 angeordnet. Das erste, zweite und dritte Laufrollenpaar 5, 6, 7 liegt an der Oberseite 13 des Flansches 25, an der Bauteilwand 30 und an der Flansch-Stirnseite 17 an. Die beiden Hilfs-Auflager 8 hintergreifen die der vorzuspannenden Schraubverbindung 15a benachbarten Schraubverbindungen 15. Die Halterungseinrichtung 3 ist an dem Schraubenspannzylinder 16 befestigt.

Der Schraubenbolzen wird nun vorgespannt. Nach Beendigung des Spannvorganges wird der Schraubenspannzylinder 16 vom Bolzenende gelöst, mittels der Gasdruckfedern 21 die Halterungseinrichtung 3 und der an ihr befestigte Schraubenspannzylinder 16 soweit nach oben bewegt, dass die Unterkante des Schraubenspannzylinders 16 oberhalb des Schraubenbolzenendes der nunmehr vorgespannten Schraubverbindung 15a liegt. Nun kann die Hebe- und Transportvorrichtung 1 und mit ihr der Schraubenspannzylinder 16 frei zur nächsten Schraubverbindung 15 verschoben bzw. gerollt werden und dort der Schraubenspannzylinder 16 auf die Schraubverbindung 15 gesetzt werden, indem die Gasdruckzylinder 21 wieder eingefahren werden.

## Patentansprüche

1. Hebe- und Transportvorrichtung zum Heben einer Last und deren Transport quer zur Heberichtung, zur Verwendung beim Herstellen einer geschraubten Flanschverbindung, um ein Schraubwerkzeug (16) in eine Schraubstellung zu bringen, in der es mit einer vorzuspannenden oder zu lösenden Schraubverbindung (15a) in Eingriff steht, oder in eine Transportstellung, in der es außer Eingriff mit einer Schraubverbindung (15) und zur nächsten Schraubverbindung (15) transportierbar ist, wobei der Flansch (25) sich horizontal erstreckt, mit
einem Rahmen (2), der sich zur Aufnahme und zum Heben einer Last um einen Lastraum (14) vorgegebener Größe herum erstreckt,
einer Halterungseinrichtung (3) zur Halterung der Last, wobei die Halterungseinrichtung (3) in Heberichtung (9) relativ zum Rahmen (2) bewegbar ist, und mit
einer Hubeinrichtung (4), die neben dem Lastraum (14) an dem Rahmen (2) befestigt ist und zum Heben und Senken der Halterungseinrichtung (3) mit daran befestigter Last eingerichtet ist,
wobei der Rahmen (2) auf einem ersten und einem zweiten Auflager (5, 6) gelagert ist, deren Auflagerichtungen (5a, 6a) jeweils senkrecht zur Transportrichtung (10) und zueinander unter einem vorgegebenen Winkel verlaufen und die sowohl in Heberichtung (9) als auch senkrecht zur Transportrichtung (10) und zur Heberichtung (9) zueinander einen Abstand aufweisen,
wobei das erste Auflager (5) zur Anlage an der Oberseite (13) des Flansches (25) zwischen Schraubverbindung (15) und Flanschkante (26) und das zweite Auflager (6) zur Anlage oberhalb der Schraubverbindung (15) an eine vom Flansch (25) aufgehende Bauteilwand (30) ausgelegt ist.
**gekennzeichnet durch**
eine Zugverankerung (40), die mit dem Schraubwerkzeug (16) funktionsmäßig verbindbar ist und in an einem Flansch (25) montierten Zustand der Hebe- und Transportvorrichtung (1) lösbar mit dem Flansch (25) oder mit mindestens einer der vorzuspannenden Schraubverbindung (15a) benachbarten Schraubverbindung (15) verbindbar ist und dazu ausgelegt ist, bei einem Bruch der vorzuspannenden Schraubverbindung (15a) oder der Verbindung des Schraubwerkzeugs (16) mit der vorzuspannenden Schraubverbindung (15a) während des Vorspannens dieser Schraubverbindung (15a) den Abhebeweg des Schraubwerkzeugs (16) in Hubrichtung auf ein vorgegebenes Maß zu begrenzen.

2. Hebe- und Transportvorrichtung nach Anspruch 1, **dadurch gekennzeichnet, dass** die Zugverankerung (40) einen L-förmigen Steg (41, 42) aufweist, der
dazu ausgelegt ist, sich mit einem ersten Abschnitt (41a, 42a) entlang der Flansch-Stirnseite (17) und mit einem zum ersten Abschnitt (41a, 42a) querverlaufenden zweiten Abschnitt (41b, 42b) entlang der Flansch-Unterseite (36) zu erstrecken, wobei der zweite Abschnitt (41b, 42b) zumindest auf einem Teilabschnitt (41c, 45; 42c, 46) einen vorgegebenen lichten Maximalabstand (47) zur Flansch-Unterseite (36) nicht überschreitet,
biegesteif ausgebildet ist und biegesteif mit dem Rahmen (2) verbunden ist und
dazu ausgelegt ist, durch Formschluss zwischen der Flansch-Unterseite (36) und zumindest dem besagten Teilabschnitt (41c, 45; 42c, 46) des zweiten Abschnitts (41b, 42b) des L-förmigen Steges (41, 42) den Abhebeweg des Rahmens (2) in Hubrichtung auf ein zweites vorgegebenes Maß zu begrenzen.

3. Hebe- und Transportvorrichtung nach Anspruch 2, **dadurch gekennzeichnet, dass** der L-förmige Steg zwei L-förmige Stegteile (41, 42) aufweist, die in Transportrichtung (10) zueinander beabstandet sind und zueinander parallel verlaufen.

4. Hebe- und Transportvorrichtung nach Anspruch 2 oder 3, **dadurch gekennzeichnet, dass** der zweite Abschnitt (41b, 42b) des L-förmigen Steges (41, 42) dazu ausgelegt ist, vor den Schraubverbindungen (15) zu enden.

5. Hebe- und Transportvorrichtung nach Anspruch 3, **dadurch gekennzeichnet, dass** die zweiten Abschnitte (41b, 42b) der zwei L-förmigen Stegteile (41, 42) jeweils auf zumindest einem Teilabschnitt (50, 51) dazu ausgelegt sind, die der vorzuspannenden Schraubverbindung (15a) benachbarten Schraubverbindungen (15) zu hintergreifen, und die hintergreifenden Teilabschnitte (50, 51) die besagten Teilabschnitte sind, die den vorgegebenen lichten Maximalabstand (47) zur Flansch-Unterseite (36) nicht überschreiten.

6. Hebe- und Transportvorrichtung nach einem der Ansprüche 2 bis 5, **dadurch gekennzeichnet, dass** der L-förmige Steg (41, 42) ferner dazu ausgelegt ist, im Zusammenwirken mit dem auf der Flansch-Oberseite (13) anliegendem ersten Auflager (5) ein C-förmiges biegesteifes Gebilde zu bilden, das bei einem Bruch der vorzuspannenden Schraubverbindung (15a) oder der Verbindung des Schraubwerkzeugs (16) mit der vorzuspannenden Schraubverbindung (15a) durch Formschluss mit dem Flansch (25) den Kippwinkel des Rahmens (2) um eine zur Transportrichtung (10) parallele Achse auf ein jeweils vorgegebenes Maß begrenzt.

7. Hebe- und Transportvorrichtung nach Anspruch 1, **dadurch gekennzeichnet, dass** die Zugverankerung (40) mindestens ein Zugelement (52) aufweist, das an dem Rahmen (2) befestigt ist und einen Schraubanschluss (53) aufweist, der auf das auf der Flansch-Oberseite (13) aus einer Schraubenmutter (27) vorragende Gewindeende einer Schraubverbindung (15) aufschraubbar ist.

8. Hebe- und Transportvorrichtung nach Anspruch 7, **dadurch gekennzeichnet, dass** der Rahmen (2) eine Querstrebe (19) aufweist, die sich in an einem Flansch (25) montierten Zustand der Hebe- und Transportvorrichtung (1) oberhalb der vorzuspannenden Schraubverbindung (15a) erstreckt, und dass das Zugelement (52) sich quer über die Querstrebe (19) von deren der Flansch-Stirnseite (17) zugewandten Seite zu deren der Flansch-Stirnseite (17) abgewandten Seite erstreckt und beidseits des Rahmens (2) auf ein aus einer Schraubenmutter (27) vorragendes Gewindeende einer Schraubverbindung (15) aufschraubbar ist.

9. Hebe- und Transportvorrichtung nach Anspruch 7, **dadurch gekennzeichnet, dass** die Zugverankerung (40) aus zwei getrennten Zugelementen gebildet ist, die jeweils an einem der Rahmenteile (11, 12) befestigt sind und einen Schraubanschluss (53) aufweisen, der auf das auf der Flansch-Oberseite (13) aus einer Schraubenmutter (27) vorragende Gewindeende einer Schraubverbindung (15) aufschraubbar ist.

10. Hebe- und Transportvorrichtung nach einem der Ansprüche 7 bis 9, **dadurch gekennzeichnet, dass** jeder Schraubanschluss (53) über einen Schnellspann- oder Klemmmechanismus verfügt, mit dem die Verbindung mit dem über eine Schraubenmutter (27) vorragenden Gewindeende schnell herstellbar und wieder lösbar ist.

11. Hebe- und Transportvorrichtung nach einem der vorhergehenden Ansprüche, **dadurch gekennzeichnet, dass** zumindest das zweite Auflager (6) magnetisch ist.

## Claims

1. A lifting and transport device for lifting a load and its transport lateral to the lifting direction, for use with generating a threaded flange connection for bringing a bolting tool (16) in a bolting position where it is in engagement with a bolting connection (15a) to be pre-tensioned or to be released, or in a transport position where it is not in engagement with a bolting connection (15) und is transportable to the next bolting connection (15), wherein the flange (25) extends horizontally, comprising
a frame (2) which extends around a load space (14) with predefined size for receiving and for lifting a load,
a retaining device (3) for retaining the load, wherein the retaining device (3) is movable in lifting direction relatively to the frame (2), and comprising
a lifting device (4) which is attached to the frame (2) next to the load space (14) and is configured for lifting and lowering of the retaining device (3) with a load attached thereto,
wherein the frame (2) is mounted on a first and a second support (5, 6) whose support directions (5a, 6a) each run perpendicular to the transport direction (10) and in a predetermined angle to each other and which have a spacing to each other both in lifting direction (9) and perpendicular to the transport direction (10) and the lifting direction (9),
wherein the first support (5) is configured for abutment against the top side (13) of the flange (25) between the bolting connection (15) and the flange edge (26) and the second support (6) is configured for abutment, above the bolting connection (15), against a component wall (30) extending from the flange (25),
**characterized in that**
a tension anchor (40) which is connectable with the bolting tool (16) in terms of function and, in a state of the lifting and transport device (1) mounted to a flange (25), is releasably connectable to the flange (25) or at least to one bolting connection (15) neighboring the bolting connection (15a) to be pre-tensioned and, in the event of failure of the bolting connection (15a) to be pre-tensioned or the connection of the bolting tool (16) with the bolting connection (15a) to be pre-tensioned during pre-tensioning of this bolting connection (15a), is configured to limit the lifting distance of the bolting tool (16) in lifting direction to a predetermined amount.

2. The lifting and transport device according to claim 1, **characterized in that** the tension anchor (40) has a L-shaped bar (41, 42) which
is configured to extend with a first section (41a, 42a) along the flange end surface (17) and with a second section (41b, 42b) running laterally to the first section (41a, 42a) along the flange bottom side (36), wherein the second section (41b, 42b) at least on a sub-section (41c, 45; 42c, 46) does not exceed a predetermined maximum clearance (47) to the flange bottom side (36),
is configured rigid and is connected rigidly to the frame,
is configured, due to form lock between the flange bottom side (36) and at least the said sub-section (41c, 45; 42c, 46) of the second section (41b, 42b) of the L-shaped bar (41, 42), to limit the lifting distance of the frame (2) in lifting direction to a predetermined second amount.

3. The lifting and transport device according to claim 2, **characterized in that** the L-shaped bar has two L-shaped bar parts (41, 42) which are spaced to each other in transport direction (10) and run parallel to each other.

4. The lifting and transport device according to claim 2 or 3, **characterized in that** the second section (41b, 42b) of the L-shaped bar (41, 42) is configured to end in front of the bolting connections (15).

5. The lifting and transport device according to claim 3, **characterized in that** the second section (41b, 42b) of the two L-shaped bar parts (41, 42) are each configured at least on a sub-section (50, 51) to engage with the bolting connection (15) neighboring the bolting connection (15a) to be pre-tensioned, and the engaged sub-sections (50, 51) are the said sub-sections which do not exceed the predetermined maximum clearance (47) to the flange bottom side (36).

6. The lifting and transport device according to any one of claims 2 to 5, **characterized in that** the L-shaped bar (41, 42) is further configured to form a C-shaped rigid building during cooperating with the first support (5) abutting against the flange top side (13) which building, in the event of failure of the bolting connection (15a) to be pre-tensioned or the connection of the bolting tool (16) with the bolting connection (15a) to be pre-tensioned due to form lock with the flange (25), limits the tilt angle of the frame (2) around an axis parallel to the transport direction (10) to a respective predetermined amount.

7. The lifting and transport device according to claim 1, **characterized in that** the tension anchor (40) has at least a tension element (52) which is attached to the frame (2) and has a bolting port (53) which is screwable to the threaded end of a bolting connection (15) protruding through a bolting nut (27) on the flange top side (13).

8. The lifting and transport device according to claim 7, **characterized in that** the frame (2) has a lateral bar (19) which extends, in a state of the lifting and transport device (1) mounted on the flange (25), above the bolting connection (15a) to be pre-tensioned, and that the tension element (52) extends lateral across the lateral bar (19) from its side facing the flange end surface (17) to its side facing away from the flange end surface (17) and is screwable on both sides of the frame (2) to a threaded end of a bolting connection (15) which protrudes through a bolting nut (27).

9. The lifting and transport device according to claim 7, **characterized in that** that the tension anchor (40) is formed of two separate tension elements each of which is attached to one of the frame parts (11, 12) and have a bolting port (53) which is screwable to the threaded end of a bolting connection (15) protruding through a bolting nut (27) on the flange top side (13).

10. The lifting and transport device according to any one of claims 7 to 9, **characterized in that** each bolting port (53) has a quick-release or clamping mechanism with which the connection with the threaded end of a protruding through a bolting nut (27) is to be established and released quickly.

11. The lifting and transport device according to any one of the preceding claims, **characterized in that** at least the second support (6) is magnetic.

## Revendications

1. Dispositif de levage et de transport destiné à lever une charge et à la transporter transversalement à la direction de levage, à utiliser lors d'une réalisation d'une liaison à bride vissée pour amener un outil de vissage (16) dans une position de vissage dans laquelle il se trouve en engagement avec un raccord de vissage (15a) devant être précontraint ou détaché, ou dans une position de transport dans laquelle il peut être transporté hors de l'engagement avec un raccord de vissage (15) et jusqu'au prochain raccord de vissage (15), la bride (25) s'étendant horizontalement, comprenant
un châssis (2) qui s'étend de façon à recevoir et à lever une charge autour d'un espace de chargement (14) d'une taille prédéterminée,
un moyen de maintien (3) destiné à maintenir la charge, le moyen de maintien (3) pouvant être déplacé dans une direction de levage (9) relativement au châssis (2), et comprenant
un moyen de levage (4) qui est fixé au niveau du cadre (2) à côté de l'espace de chargement (14) et qui est configuré pour lever et abaisser le moyen de maintien (3) avec la charge fixée à celui-ci,
dans lequel le châssis (2) est monté sur un premier et un deuxième support (5, 6) dont des directions de support (5a, 6a) courent respectivement verticalement à la direction de transport (10) et sous un angle prédéterminé l'une par rapport à l'autre, et qui présentent une distance l'un par rapport à l'autre, tant dans la direction de levage (9) que verticalement à la direction de transport (10) et à la direction de levage (9),
dans lequel le premier support (5) est conçu pour un support au niveau de la face supérieure (13) de la bride (25) entre le raccord de vissage (15) et l'arête de bride (26), et le deuxième support (6) est conçu pour un support au-dessus du raccord de vissage (15) sur une paroi de composant (30) partant de la bride (25),
**caractérisé par**
un ancrage de traction (40) qui peut être relié de manière fonctionnelle à l'outil de vissage (16) et qui, dans un état monté sur la bride (25), peut être relié de manière détachable avec la bride (25) dans une direction de levage et de transport (1) ou qui peut être relié à l'un au moins d'un raccord de vissage voisin (15) du raccord de vissage précontraint (15a), et qui est conçu pour limiter, en cas de rupture du raccord de vissage précontraint (15a) ou de la liaison de l'outil de vissage (16) avec le raccord de vissage précontraint (15a) pendant la précontrainte de ce raccord de vissage (15a), la course de levage de l'outil de vissage (16) dans une direction de levage à une ampleur prédéterminée.

2. Dispositif de levage et de transport selon la revendication 1, **caractérisé en ce que** l'ancrage de traction (40) présente une barre en forme de L (41, 42) qui
est conçue pour s'étendre avec une première section (41a, 42a) le long de la face avant de bride (17) et avec une deuxième section (41b, 42b), courant transversalement à la première section (41a, 42a), le long de la face inférieure de bride (36), la deuxième section (41b, 42b) ne dépassant pas, au moins sur une section partielle (41c, 45 ; 42c, 46), une distance maximale libre prédéterminée (47) jusqu'à la face inférieure de bride (36),
est réalisée de manière rigide en flexion et est lié au châssis (2) de manière rigide en flexion, et
est conçue pour limiter la course de levage du châssis (2) dans la direction de levage à une deuxième ampleur prédéterminée, par coopération de forme entre la face inférieure de bride (36) et ladite au moins une section partielle (41c, 45 ; 42c, 46) de la deuxième section (41b, 42b) de la barre en forme de L (41, 42).

3. Dispositif de levage et de transport selon la revendication 2, **caractérisé en ce que** la barre en forme de L présente deux parties de barre en forme de L (41, 42) qui sont espacées l'une de l'autre dans la direction de transport (10) et courent parallèlement l'une à l'autre.

4. Dispositif de levage et de transport selon la revendication 2 ou 3, **caractérisé en ce que** la deuxième section (41b, 42b) de la barre en forme de L (41, 42) est conçue de façon à se terminer avant les raccords de vissage (15).

5. Dispositif de levage et de transport selon la revendication 3, **caractérisé en ce que** les deuxièmes sections (41b, 42b) des deux parties de barre en forme de L (41, 42) sont conçues respectivement sur au moins une section partielle (50, 51) pour venir en engagement derrière les raccords de vissage voisins (15) du raccord de vissage précontraint (15a), et **en ce que** les sections partielles (50, 51) venant en engagement sont lesdites sections partielles qui ne dépassent pas la distance maximale libre prédéterminée (47) jusqu'à la face inférieure de bride (36).

6. Dispositif de levage et de transport selon l'une des revendications 2 à 5, **caractérisé en ce que** la barre en forme de L (41, 42) est en outre conçue pour former, en coopération avec le premier support reposant sur la face supérieure de bride (13), un ensemble en forme de C rigide en flexion qui, en cas de rupture du raccord de vissage précontraint (15a) ou de la liaison de l'outil de vissage (16) avec le raccord de vissage précontraint (15a), limite l'angle de basculement du châssis (2) autour d'un axe parallèle à la direction de transport (10) à une ampleur respectivement prédéterminée, par coopération de forme avec la bride (25).

7. Dispositif de levage et de transport selon la revendication 1, **caractérisé en ce que** l'ancrage de traction (40) présente au moins un élément de traction (52) qui est fixé au niveau du châssis (2) et présente une connexion de vissage (53) qui peut être vissée sur l'extrémité filetée d'un raccord de vissage (15), sur la face supérieure de bride (13), en saillie hors d'un écrou (27).

8. Dispositif de levage et de transport selon la revendication 7, **caractérisé en ce que** le châssis (2) présente un montant transversal (19) qui s'étend, dans un état monté sur une bride (25), dans la direction de levage et de transport (1) au-dessus du raccord de vissage précontraint (15a), et **en ce que** l'élément de traction (52) s'étend transversalement sur le montant transversal (19) depuis le côté de celui-ci tourné vers la face avant de bride (17) jusqu'au côté de celui-ci détourné de la face avant de bride (17), et peut être vissé des deux côtés du châssis (2) sur une extrémité filetée d'un raccord de vissage (15), en saillie hors d'un écrou (27).

9. Dispositif de levage et de transport selon la revendication 7, **caractérisé en ce que** l'ancrage de traction (40) est formé de deux éléments de traction distincts qui sont fixés respectivement à l'une des parties de cadre (11, 12) et présentent une connexion de vissage (53) qui peut être vissée sur l'extrémité filetée d'un raccord de vissage (15), sur la face supérieure de bride (13), en saillie hors d'un écrou.

10. Dispositif de levage et de transport selon l'une des revendications 7 à 9, **caractérisé en ce que** chaque connexion de vissage (53) dispose d'un mécanisme d'attache rapide ou de serrage avec lequel la liaison avec l'extrémité filetée en saillie hors d'un écrou (27) peut être rapidement réalisée et à nouveau détachée.

11. Dispositif de levage et de transport selon l'une des revendications précédentes, **caractérisé en ce qu'**au moins le deuxième support (6) est magnétique.
